# DEMANDE DE BREVET EUROPEEN

(11) **EP 2 259 545 A1**
(43) Date de publication de la demande: **08.12.2010**
(21) Numéro de dépôt: 09305516.8
(22) Date de dépôt: 05.06.2009
(51) Int. Cl.: H04L 29/06, H04W 12/02, H04W 8/04, H04W 8/26

(54) **Procédé de calcul d'un premier identifiant d'un élément sécurisé d'un terminal mobile à partir d'un second identifiant de cet élément sécurisé**

(71) Demandeur: Gemalto SA, 92190 Meudon (FR)
(72) Inventeur: Gros, Jean-François, 13012, MARSEILLE (FR); Ait Aissa, Radouane, 13010, MARSEILLE (FR)

(57) **Abrégé**

L'invention concerne un procédé de calcul d'un premier identifiant d'un élément sécurisé (10) d'un terminal mobile (11) à partir d'un second identifiant de cet élément sécurisé (10). Le premier identifiant est un identifiant temporaire et le second identifiant est un identifiant définitif de l'élément sécurisé (10) dans un réseau de télécommunications.
Selon l'invention, le procédé consiste à:
a - calculer, lors de la première tentative de connexion du terminal mobile (11) au réseau de télécommunications, le premier identifiant à partir du second identifiant;
b - transmettre au réseau de télécommunications le premier identifiant;
c - en réponse du réseau de télécommunications d'un message d'acceptation du premier identifiant, inhiber l'utilisation du premier identifiant par l'élément sécurisé (10) et, pour toute tentative ultérieure de connexion au réseau de télécommunications, utiliser le second identifiant pour authentifier l'élément sécurisé (10).

## Description

Le domaine de l'invention est celui des réseaux de télécommunications, notamment celui des éléments sécurisés utilisés dans les terminaux mobiles communiquant dans de tels réseaux.

On entend par élément sécurisé une carte telle qu'une carte SIM (Subscriber Identity Module en anglais) utilisée dans des terminaux de type GSM ou USIM (Universal Subscriber Identity Module en anglais) utilisée dans des terminaux de type UMTS. On entend également par élément sécurisé un module de sécurité intégré de manière fixe (non amovible) dans un terminal mobile.

Ces éléments sécurisés servent notamment à authentifier l'abonné du terminal mobile auprès de l'opérateur du réseau de télécommunications. L'authentification consiste à transmettre au réseau de télécommunications, depuis le terminal mobile renfermant l'élément sécurisé, un identifiant de l'élément sécurisé. Cet identifiant est appelé IMSI (International Mobile Subscriber Identity en anglais) dans un système GSM ou UMTS. L'IMSI caractérise l'élément sécurisé et donc le souscripteur à un abonnement au réseau de télécommunications. La reconnaissance de l'IMSI au niveau du réseau de l'opérateur permet à l'abonné de s'y connecter et à l'opérateur de gérer l'abonnement de l'utilisateur.

Les IMSIs des éléments sécurisés sont générés par l'opérateur qui les fournit aux fabricants des éléments sécurisés. Ces derniers, lors de la phase de personnalisation des éléments sécurisés, mémorisent de manière sécurisée une IMSI dans chaque élément sécurisé. Chaque élément sécurisé comprend alors une IMSI qui lui est propre et qui lui permettra ultérieurement de s'authentifier sur le réseau de l'opérateur. Après personnalisation, les éléments sécurisés sont vendus à l'opérateur qui les redistribue à son réseau commercial qui assure ensuite leur revente aux futurs abonnés.

Afin de permettre à un nouvel abonné de se connecter au réseau de télécommunications avec son terminal mobile dès qu'il achète un élément sécurisé, l'IMSI de cet élément sécurisé doit être connu du réseau. A cet effet, les IMSIs des éléments sécurisés sont provisionnés au niveau du réseau de l'opérateur au moment où ces IMSIs sont fournis au(x) fabricant(s) des éléments sécurisés, ou tout le moins au moment où la personnalisation des éléments sécurisés est lancée. Ces IMSIs sont en pratique provisionnés dans les HLRs du réseau de l'opérateur. Le HLR ou Home Location Register est un élément du réseau cellulaire de téléphonie mobile GSM. Il s'agit de la base de données centrale comportant les informations relatives à tout abonné autorisé à utiliser ce réseau GSM. Afin que les données soient cohérentes sur l'ensemble du réseau, c'est elle qui sert de référence aux autres bases de données locales, les VLR.

Le HLR contient notamment des informations caractérisant l'utilisateur lui-même :
- l'IMSI, identifiant l'utilisateur,
- l'IMEI définissant le terminal mobile utilisé,
- le MSISDN (Mobile Station Integrated Service Digital Network), indiquant le numéro d'appel international via lequel l'abonné est joignable,
- les services souscrits par l'abonné, l'état des renvois d'appels, ...

Le fait de provisionner les IMSIs au niveau du HLR pose le problème suivant : entre la personnalisation d'un élément sécurisé et son achat par un abonné, il peut s'écouler un temps très important, plusieurs mois voire plusieurs années si l'opérateur n'arrive pas à écouler ses stocks d'éléments sécurisés. Or, provisionner les IMSIs au niveau d'un HLR a un coût non négligeable. Ainsi, lorsqu'un opérateur demande la personnalisation de plusieurs millions d'éléments sécurisés et n'arrive pas à écouler ses stocks suffisamment rapidement, cela représente pour lui une perte financière très importante puisqu'il est obligé de provisionner les IMSIs d'éléments sécurisés non vendus.

Afin de remédier à cet inconvénient, il est connu d'inscrire dans les éléments sécurisés, non pas un seul IMSI, mais deux : un IMSI temporaire, noté IMSIₜ, et un IMSI définitif, noté IMSI_{d}.

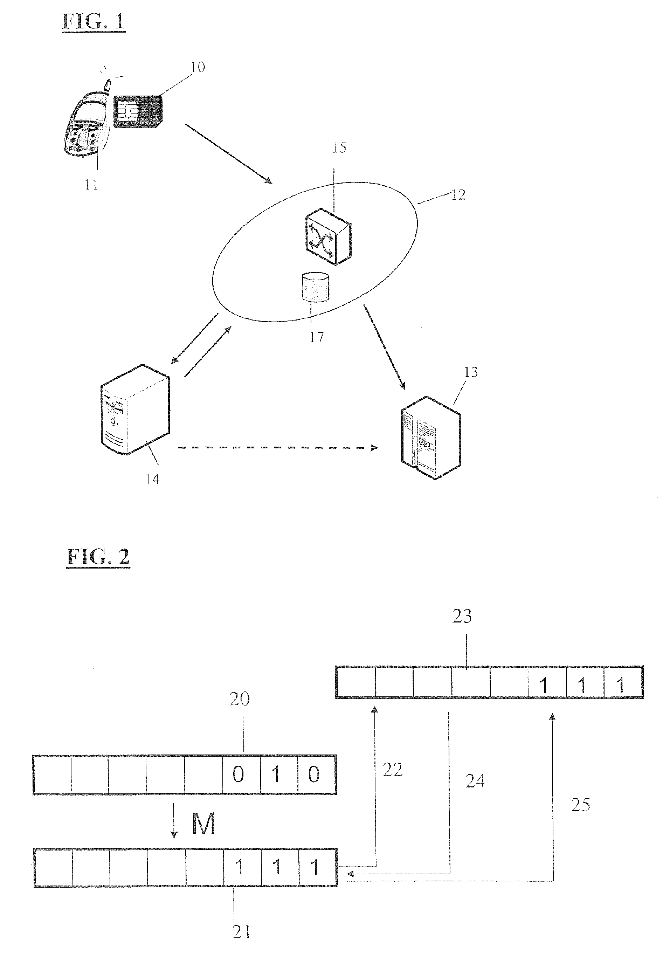

La figure 1 montre une partie d'un réseau de télécommunications où un élément sécurisé comprend deux tels IMSIs.

Dans cette figure, un élément sécurisé 10, sous la forme d'une carte SIM ou USIM, est compris dans un terminal mobile 11. Le terminal 11 communique via une station BTS non représentée avec un ensemble 12 comprenant un MSC 15 (Mobile Switching Center en anglais) associé à un VLR (Visitor Location Register en anglais) et une base de données 17 comprenant les IMSI temporaires et les IMSIs définitifs associés à ces IMSI temporaires.

Lors de la première connexion de l'élément sécurisé 10 au réseau, l'IMSI temporaire IMSIₜ est transmis du terminal mobile 11 au réseau de télécommunications. L'IMSI temporaire IMSIₜ est détecté par l'ensemble 12 comme étant un IMSI temporaire et la tentative de connexion est routée vers un dispositif de détection automatique de connexion 14. Celui-ci établit alors une connexion vers un HLR 13 en lui indiquant qu'il doit provisionner l'IMSI définitif associé à l'IMSI temporaire reçu. Ensuite, le dispositif de détection automatique de connexion 14 informe l'ensemble 12 que l'IMSI définitif est provisionné. Cette information est également transmise au terminal 11 et à l'élément sécurisé 10, soit par l'ensemble 12, soit directement par le dispositif de détection automatique de connexion 14. De cette manière, l'élément sécurisé est informé qu'il peut désormais utiliser IMSI_{d} en lieu et place d'IMSIₜ. A la tentative de connexion suivante, l'élément sécurisé 10 et/ou le terminal mobile 11 utilisera IMSI_{d} pour se connecter au réseau. L'ensemble 12, à la réception d'IMSI_{d}, routera directement la demande de connexion au HLR 13, le dispositif de détection automatique de connexion 14 n'étant plus sollicité.

L'IMSI temporaire IMSIₜ n'étant plus utilisé par l'élément sécurisé 10, celui-ci peut être recyclé, c'est-à-dire être utilisé pour la personnalisation d'un autre élément sécurisé.

L'inconvénient de cette solution est que le nombre d'IMSIₜ n'est pas illimité au niveau du réseau de télécommunications. Il faut donc que l'opérateur les gère tout comme il gère les IMSI_{d} dans l'état de la technique afin de pouvoir les recycler.

La présente invention a notamment pour objectif de remédier à cet inconvénient.

Plus précisément, un des objectifs de l'invention est de fournir un procédé de gestion d'IMSIs permettant à un opérateur de ne pas avoir à provisionner des IMSIs non utilisés dans un HLR, tout en évitant de stocker deux INISIs dans chaque élément sécurisé.

Cet objectif, ainsi que d'autres qui apparaîtront par la suite, est atteint grâce à un procédé de calcul d'un premier identifiant d'un élément sécurisé d'un terminal mobile à partir d'un second identifiant de cet élément sécurisé, le premier identifiant étant un identifiant temporaire et le second identifiant étant un identifiant définitif de l'élément sécurisé dans un réseau de télécommunications, le procédé consistant à :
a - calculer, lors de la première tentative de connexion du terminal mobile au réseau de télécommunications, le premier identifiant à partir du second identifiant ;
b - transmettre au réseau de télécommunications le premier identifiant ;
c - en réponse du réseau de télécommunications d'un message d'acceptation du premier identifiant, inhiber l'utilisation du premier identifiant par l'élément sécurisé et, pour toute tentative ultérieure de connexion au réseau de télécommunications, utiliser le second identifiant pour authentifier l'élément sécurisé.

Avantageusement, l'étape -a- consiste à calculer le premier identifiant à partir du second identifiant en appliquant un masque au second identifiant.

Préférentiellement, l'application du masque consiste à modifier l'état d'au moins un bit du second identifiant, l'état du bit étant reconnu au niveau du réseau comme étant celui d'un identifiant temporaire.

Dans un mode de mise en oeuvre avantageux, le procédé consiste à intercepter le second identifiant transmis de l'élément sécurisé au terminal mobile et à le convertir dans le premier identifiant.

D'autres caractéristiques et avantages de l'invention apparaîtront à la lecture suivante de deux modes de mise en oeuvre avantageux de l'invention, donnés à titre illustratif et non limitatif, et des figures annexées dans lesquelles :
- la figure 1 montre une partie d'un réseau de télécommunications où un élément sécurisé comprend deux IMSIs ;
- la figure 2 représente une première méthode de mise en oeuvre de la présente invention ;
- la figure 3 représente une deuxième méthode de mise en oeuvre de la présente invention.

La figure 1 a été décrite en référence à l'état de la technique.

La figure 2 représente une première méthode de mise en oeuvre de la présente invention.

Selon la recommandation E 212 de l'UIT, l'identité IMSI se compose de trois champs: MCC, MNC et MSIN :
- 3 chiffres correspondant au MCC (Mobile Country Code) c'est à dire à l'indicatif du pays.
- 2 ou 3 chiffres correspondant au MNC (Mobile Network Code) c'est à dire à l'indicatif de l'opérateur.
- 10 chiffres ou moins correspondant au MSIN (Mobile Subscriber Identification Number) c'est à dire au numéro de l'abonné à l'intérieur du réseau GSM. On rajoute en plus le numéro avant le MSIN, H1 H2 (2 chiffres) pour donner l'adresse du HLR de l'abonné du réseau.

Dans la figure 2, la référence 20 correspond à une partie du MSIN, par exemple aux 8 derniers bits du MSIN. Dans cet exemple, les trois derniers bits sont 010. Ces derniers bits sont ceux de l'IMSI définitif IMSI_{d} d'un élément sécurisé. Dans ce premier mode de mise en oeuvre, l'invention propose, lors de la première tentative de connexion de l'abonné au réseau de son opérateur, d'appliquer un masque M au MSIN_{d} de l'élément sécurisé afin de générer un IMSI temporaire IMSIₜ dont les derniers bits du dernier octet 21 ne sont plus 010 mais 111. Cette opération de masquage peut, dans un mode de réalisation simplifié, consister en une simple conversion des bits à 0 en des bits à 1. La fonction de masquage peut être plus élaborée, comme il sera vu par la suite.

Lors de la première tentative de connexion au réseau de l'opérateur, IMSIₜ avec ses trois derniers bits à 1 est donc transmis (étape 22) à l'ensemble 12 de la figure 1. Celui-ci détecte à la réception de l'octet 23, par lecture de sa base de données 17 ou de part la structure de l'IMSI reçu (derniers bits à 1), qu'il s'agit non pas d'un IMSI définitif IMSI_{d} mais d'un IMSI temporaire IMSIₜ. Le dispositif de détection automatique de connexion 14 est alors contacté pour qu'il provisionne dans le HLR 13 l'IMSI définitif IMSI_{d} dont les derniers bits sont 010.

Un message 24 d'autorisation d'accès au réseau est transmis à l'élément sécurisé une fois celui-ci authentifié par son IMSI temporaire IMSIₜ.

L'IMSI définitif IMSI_{d} peut être calculé en appliquant à l'IMSI temporaire IMSIₜ une fonction réciproque de celle obtenue en appliquant le masque M. Cette fonction réciproque peut être notée M⁻¹. Il est en effet important de pouvoir reconstituer l'IMSI définitif IMSI_{d} à partir de l'IMSI temporaire IMSIₜ au niveau du dispositif de détection automatique de connexion 14 ou au niveau du HLR 13 pour qu'à la prochaine tentative de connexion de l'usager au réseau, cet IMSI_{d} soit reconnu au niveau de l'ensemble 12 pour être transmis au HLR 13 en tant qu'IMSI définitif. Une fois provisionné dans le HLR 13, l'IMSI_{d} est facturé à l'opérateur.

L'IMSI définitif IMSI_{d} peut également être transmis lors d'une étape 25 du terminal au réseau, par exemple via SMS.

La fonction de masquage M peut être une simple inversion de bits du MSIN dans un mode de réalisation préféré. Dans ce premier mode de mise en oeuvre, la fonction de masquage est réalisée par une application installée au niveau de la carte SIM 10.

Une fois l'IMSIₜ reconnu au niveau du dispositif de détection automatique de connexion 14, celui-ci envoie une commande de désactivation de l'IMSIₜ au niveau de la carte 10. Celle-ci utilisera à l'avenir l'IMSI_{d} en désactivant la fonction M.

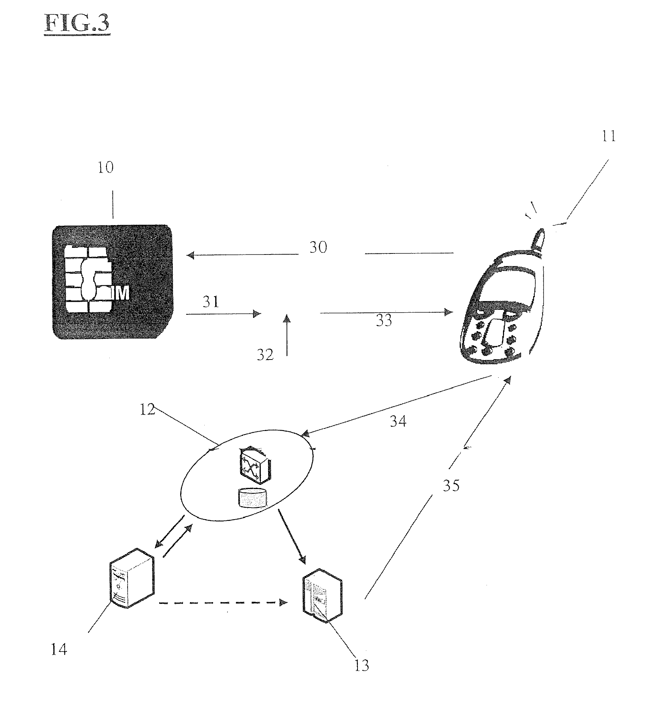

La figure 3 représente une deuxième méthode de mise en oeuvre de la présente invention.

Dans ce mode de mise en oeuvre, au lieu d'installer une fonction de masquage au niveau de la carte SIM 10, il est prévu de modifier le système d'exploitation de la carte SIM 10. Lors d'une première tentative de connexion 30 au réseau, le terminal 11 demande à la carte 10 son numéro d'IMSI. Celle-ci lui répond en lui envoyant son IMSI définitif IMSI_{d} lors d'une étape 31. Le système d'exploitation 32 de la carte 10 intercepte IMSI_{d} et le remplace par l'IMSI temporaire IMSIₜ et c'est donc l'IMSIₜ qui est transmis, lors d'une étape 33, au terminal 11. Le remplacement de l'IMSI définitif IMSI_{d} par l'IMSI temporaire IMSIₜ peut également consister à utiliser un masque M tel que décrit en référence à la figure 2.

L'étape suivante consiste à transmettre IMSIₜ à l'ensemble 12 qui reconnaît qu'il s'agit d'une IMSI temporaire. Le dispositif de détection automatique de connexion 14 est alors contacté pour qu'il provisionne dans le HLR 13 l'IMSI définitif IMSI_{d}. Une fois celui-ci provisionné, le HLR 13 ou le dispositif de détection automatique de connexion 14 envoie un message au terminal 11 pour que celui-ci désactive dans le système d'exploitation 32 le remplacement de l'IMSI définitif IMSI_{d} par l'IMSI temporaire IMSIₜ. A la prochaine tentative de connexion, l'IMSI définitif IMSI_{d} sera transmis de la carte 10 au terminal 11 sans être intercepté et modifié par le système d'exploitation 32, l'ensemble 12 le reconnaîtra comme étant un IMSI définitif IMSI_{d} et contactera directement le HLR 13.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé de calcul d'un premier identifiant d'un élément sécurisé (10) d'un terminal mobile (11) à partir d'un second identifiant dudit élément sécurisé (10), ledit premier identifiant étant un identifiant temporaire et le second identifiant étant un identifiant définitif dudit élément sécurisé (10) dans un réseau de télécommunications, ledit procédé consistant à :
a - calculer, lors de la première tentative de connexion dudit terminal mobile (11) audit réseau de télécommunications, ledit premier identifiant à partir dudit second identifiant ;
b - transmettre audit réseau de télécommunications ledit premier identifiant ;
c - en réponse dudit réseau de télécommunications d'un message d'acceptation dudit premier identifiant, inhiber l'utilisation dudit premier identifiant par ledit élément sécurisé (10) et, pour toute tentative ultérieure de connexion audit réseau de télécommunications, utiliser ledit second identifiant pour authentifier ledit élément sécurisé (10).

2. Procédé selon la revendication 1, **caractérisé en ce que** l'étape -a-consiste à calculer ledit premier identifiant à partir dudit second identifiant en appliquant un masque (M) audit second identifiant.

3. Procédé selon la revendication 2, **caractérisé en ce que** l'application dudit masque (M) consiste à modifier l'état d'au moins un bit dudit second identifiant, l'état dudit bit étant reconnu au niveau dudit réseau comme étant celui d'un identifiant temporaire.

4. Procédé selon la revendication 1, **caractérisé en ce qu'**il consiste à intercepter ledit second identifiant transmis dudit élément sécurisé (10) audit terminal mobile (11) et à le convertir dans ledit premier identifiant.
